# EUROPEAN PATENT APPLICATION

(11) **EP 3 757 913 A1**
(43) Date of publication of application: **30.12.2020**
(21) Application number: 19183492.8
(22) Date of filing: 28.06.2019
(51) Int. Cl.: G06Q 10/06, G06Q 10/08, G06Q 10/04

(54) **ARTICLE TRANSPORT SYSTEMS AND METHODS**

(71) Applicant: Skipthedishes Restaurant Services Inc., Ottawa ON K2K 3G4 (CA)
(72) Inventor: DAUPHINAIS, Andrew, 515 Legget Drive, Suite 800 Ottawa ON K2K 3G4 (CA)
(74) Representative: Leach, Sean Adam

(57) **Abstract**

The present disclosure provides systems and methods for providing improved allocation of transport requests to article transport units in an area. For a given area, a plurality of transport requests are obtained which include location data relating to first and second locations. Location data is also obtained from each of the article transport units. Each transport request is initially assigned to an article transport unit responsible for carrying out the article transport. Using the location data, a computer may determine a transport score for a given allocation of transport requests to article transport units. The allocation may then be modified and its transport score re-calculated. Transport scores may be calculated for a number of different allocations, and based on the calculated transport scores, a preferred allocation may be identified. Transport of articles by the article transport units may then occur in accordance with this preferred allocation.

## Description

### Technical Field

The present disclosure relates to systems and methods for transporting articles within an area. The present disclosure also relates to systems and methods for simulating transport of articles within an area.

### Background

Materials handling systems have been proposed in which article transport units move articles between locations, such as those within a warehouse or other facility. Delivery systems also exist for transporting articles within a geographical area. Some of these use semi-autonomous, or fully autonomous article transport units such as delivery drones.

Recent trends have focussed on increasing automation of article transport. For example, automated machinery and robotics is becoming ever more commonplace in modern warehouses and other such storage units. These may be programmed to travel to one destination (e.g. where an object to be retrieved is stored) and collect the object, before travelling to a second destination (e.g. where the object is to be delivered - such as being put on a vehicle for transporting that object elsewhere). Automated machinery of this nature may typically be battery powered and have only a limited runtime on any one charge. This may place additional constraints on the ability of such an article transport unit to perform transport requests. Modern warehouses now span up to 4.3 million square feet, and so a transport unit running out of battery away from its source/destination can have considerable negative effects on efficiency of transport articles within that geographical area.

Similar comments apply to the rising use of robots for the delivery of items in cities, and the increasing prevalence of autonomous vehicles on a transport network in a city. Technical constraints such as battery life may impede the ability of a series of such article transport units to operate at improved levels of efficiency. Each transport request may place constraints on the individual transport unit responsible for performing that article transport. In a network where a large number of transport requests are received, and there are a large number of available article transport units available for performing transport as per those transport requests, there may be a very large number of possible allocations of transport requests to article transport units. Embodiments of the present disclosure may seek to improve allocation of transport requests based on technical constraints imposed by the delivery network and the article transport units. For example, embodiments seek to allocate transport requests to provide improvements in the overall efficiency of the system.

In both of the circumstances described above, a warehouse and a geographical area, typically the article transport units are constrained to move according to particular routes such as those associated with the tracks in a "hive" warehouse, or in the transport network of an urban environment (e.g. the arrangement of roads and houses within a town/city). Technical problems arise related to the most efficient way to control these article transport units in these circumstances

### Summary

Aspects of the disclosure are set out in the independent claims and optional features are set out in the dependent claims. Aspects of the invention may be provided in conjunction with each other, and features of one aspect may be applied to other aspects.

Items may need to be retrieved from one location in the area and transported to another location in that area. Article transport units exist which may perform transport of articles in an area according to selected requests. Transport of these articles according to their requests can often be time-sensitive and so a large number of article transport units may need to be provided. Deciding on an allocation of transport requests to article transport units may present other technical problems. By providing an improved allocation of transport requests, a transport system may operate more efficiently, such as by reducing a total environmental impact associated with the transport of articles according to their respective transport requests.

In an aspect, there is provided a method of transporting articles within an area. The method comprising the steps of: (i) obtaining, by a computer (e.g. receiving at the computer), a plurality of transport requests, wherein each transport request is for a respective article to be transported from a first location to a second location; (ii) obtaining, by the computer (e.g. receiving at the computer), location data for each of a plurality of article transport units; (iii) obtaining, by the computer (e.g. receiving at the computer and/or deciding by the computer), an initial allocation providing an assignment of the plurality of transport requests to a plurality of the article transport units; (iv) obtaining, by the computer (e.g. receiving at the computer and/or deciding by the computer), an initial individual transport score for each of the plurality of allocated transport requests, wherein each said score for a request is determined based on location data for the article transport unit assigned that request and at least one of: (a) the first location, and (b) the second location for that request; (v) obtaining, by the computer (e.g. receiving at the computer and/or deciding by the computer), an initial total transport score for the initial allocation based on the initial individual transport scores; (vi) re-assigning, by the computer, at least a subset of the plurality of allocated transport requests to different article transport units to provide an updated allocation of transport requests which is different to the initial allocation; (vii) determining, by the computer, an updated total transport score for the updated allocation based on updated individual transport scores for the re-assigned transport requests; and (viii) allocating, by the computer, the transport requests according to the updated allocation and outputting a command signal to said article transport units to transport the articles in accordance with said updated allocation in the event that a difference between the updated total transport score and the initial total transport score satisfies a threshold criterion, and wherein, in the event that the difference between the updated total transport score and the initial total transport score does not satisfy the threshold criterion, repeating steps (vi) to (viii).

Embodiments may address a technical problem of improving overall operation of a fleet of article transport units within an area. Operation of the entire fleet of article transport units may be improved by determining which transport requests to allocate to which article transport units. By providing an improved allocation on a level of individual transport requests, an allocation as a whole may be improved. This may reduce time wastage, distance travelled and/or an environmental impact associated with the transport of articles within an area. The computer may send and receive messages from the plurality of article transport units in order to identify geographical location data associated with the article transport units. The computer may send and receive messages from each user requesting transport of an article to a second location. The area may be any suitable area in which articles are to be transported. For example, it may be a geographical (e.g. an urban) area such as a town or a city, or it could represent a layout of a facility such as a storage facility or warehouse in which articles are stored and which may need to be retrieved. The computer may obtain geographical data of the layout of the area, such as an indication of which articles are stored at which locations, and to where they need to be transported. These requests may be continually received, or received in bulk.

The article transport units may comprise autonomous and/or unmanned vehicles and/or robots. Article transport units may include delivery robots, or at least partially autonomous vehicles. The method may comprise outputting the command signal to a satellite navigation device associated with each article transport unit. This may enable the device to provide navigation prompts and/or controls when the article transport unit is transporting the article, as per the article transport request. The present disclosure may comprise methods of controlling a fleet of autonomous vehicles for the transport of articles within an area.

Step (v) may comprise dividing the area into a plurality of zones so that each zone has a respective plurality of transport requests associated with that zone. In some examples, the geographical location may be determined in other steps, the particular step is not to be considered limiting. For example, it may be determined after step (ii). Methods may comprise determining a number of zones into which the area should be divided. The area encompassed by each zone (e.g. the borders of each zone) may be determined by the computer based on at least one of: (i) the first locations, (ii) the second locations, and (iii) location data for the article transport units. The zones may be selected so that each zone has a number of available article transport units, wherein the number available is based on the number of requests associated with that zone (e.g. requests having at least one of: (i) a first location, and (ii) a second location, in that zone). The method may be repeated for each of the zones so that, for each zone, an updated allocation of transport requests is determined for articles and/or article transport units associated with said zone. For example, this may be steps (iii) to (viii) or (vi) to (viii).

The method may comprise obtaining transport network data associated with the area. The initial individual transport scores may be based also on said transport network data. Transport network data may comprise data indicative of current and/or future traffic levels, estimated transport times, speed limit data and navigation data (e.g. route closures or available roads). The method may comprise obtaining data associated with time delays for article transport not relating to transport of the article itself. For example, this may include data associated with time delays incurred at the first and/or second location. This may include data regarding a time by which the article will be ready for collection from the first location and/or whether or not a facility associated with the first location has agreed to prepare the relevant article for the article transport request. This may include data indicative of the current amount of article transport requests already assigned to each article transport unit, and/or any location data (first/second/current geographic) location data associated with preceding requests for that article transport unit.

Step (vi) may comprise selecting a subset of the plurality of allocated transport requests to be re-assigned, wherein said selection is based on the individual transport scores for each of the plurality of allocated transport requests. The computer may determine how large the subset should be. This may be based on the results of a degree of closeness between the updated allocation satisfying the threshold criterion. For example, in the event that the updated total transport score is close to the threshold criterion then only a few transport requests shall be reassigned, and if it is far away then more shall be reassigned. The computer may select the subset of transport requests which have the worst score (e.g. the scores which contribute the most towards the total transport score for the updated allocation from not satisfying the threshold criterion). The computer may identify the scores which have the most potential for improvement in response to an improved assignment of those requests to a different article transport unit.

Each individual transport score for a said article to be transported from a first location to a second location by a first article transport unit may be determined based on at least one of: (i) a first target time of arrival, wherein the first target time of arrival is for the first article transport unit at the first location; (ii) a first estimated time of arrival, wherein the first estimated time of arrival is for the first article transport unit at the first location; (iii) a difference between the first target time of arrival and the first estimated time of arrival; (iv) a second target time of arrival, wherein the second target time of arrival is for the first article transport unit at the second location having travelled from the first location; (v) a second estimated time of arrival, wherein the second estimated time of arrival is for the first article transport unit at the second location having travelled from the first location; and (vi) a difference between the second target time of arrival and the second estimated time of arrival. The individual transport scores may be determined based on data associated with previous transport by that article transport unit, or article transport units of that type (e.g. average speeds). They may be determined based on a type of the assigned article transport unit. They may be determined based on the time at which the transport request is to be performed.

The threshold criterion may be based on an iteration count for the number of repetitions of steps (vi) to (vii). The threshold criterion may involve a convergence criterion, and/or an indication that improvements in the total transport score are either zero or negligible. The threshold criterion may comprise assessing whether or not the current selected allocation is better than any previously determined allocations. In the event that said allocation is better than a threshold number of consecutive different allocations, the convergence criterion may be satisfied and that allocation selected and the command signal output based on said allocation.

Re-assigning of the at least a subset of the plurality of allocated transport requests may be based, at least in part, on a random element. For example, at least one transport request may be assigned to a different article transport unit. There may be a random element which determines at least one of: (i) which transport request(s) is assigned to a different article transport unit, and (ii) which different article transport unit the transport request(s) will be assigned to. Step (ii) may further comprise receiving location data measured using location sensors at the article transport units. This location data may then be transmitted to the computer to provide an indication of the current location of the article transport units.

Outputting a command signal to an article transport unit may comprise sending an instruction message comprising data configured so that a device at said article transport unit is operable to provide navigation of said article transport unit to at least one of: (i) the first location, and (ii) the second location. The command signal may be formatted for execution by a device at the article transport unit so as to provide navigation instructions for performing the delivery. For example, this may include navigation instructions from a current location to the first location and/or navigation instructions from the first location to the second location. Step (viii) may comprise operation of the article transport units to transport each respective article from a said first location to a said second location. For example, the article transport units responsible for delivering each article in the transport requests may be operated to deliver said articles from their respective first locations to their respective second locations.

In an aspect, there is provided a computer-implemented method of simulating transport of articles within an area (e.g. a geographical area such as a transport network). The method comprising: (i) obtaining a plurality of transport requests, wherein each transport request is for a respective article to be transported from a first location to a second location; (ii) obtaining location data for each of a plurality of article transport units; (iii) obtaining an initial allocation providing an assignment of the plurality of transport requests to a plurality of the plurality of article transport units; (iv) simulating, based on the obtained location data for the respective article transport units the respective first and second locations, transport of each of the respective articles from their respective first location to their respective second location by their respective article transport unit according to the initial allocation; (iv) determining, based on said simulation, an initial total transport score for the initial allocation, wherein the total transport score is based on an initial individual transport score for each of the plurality of allocated transport requests; (v) re-assigning at least a subset of the plurality of allocated transport requests to different article transport units to provide an updated allocation of transport requests which is different to the initial allocation; (vi) simulating, based on the obtained location data for the respective article transport units and the respective first and second locations, transport of each of the respective articles from their respective first location to their respective second location by their respective article transport unit according to the updated allocation. Determining scores may be considered simulation of the transport of articles in the network by the assigned article transport units. Determining the allocation using the calculated scores as disclosed herein may thus be considered simulation of transport of articles in the area.

In an aspect, there is provided an article transport system comprising: a computer; and a plurality of article transport units. The computer is configured to: (i) obtain a plurality of transport requests, wherein each transport request is for a respective article to be transported from a first location to a second location; (ii) obtain location data for each of a plurality of article transport units; (iii) obtain an initial allocation providing an assignment of the plurality of the plurality of article transport units to provide an initial allocation; (iv) obtain an initial individual transport score for each of the plurality of allocated transport requests, wherein each said score for a request is determined based on location data for the article transport unit assigned that request and at least one of: (a) the first location, and (b) the second location for that request; (v) determine an initial total transport score for the initial allocation based on the initial individual transport scores; (vi) re-assign at least a subset of the plurality of allocated transport requests to different article transport units to provide an updated allocation of transport requests which is different to the initial allocation; (vii) determine an updated total transport score for the updated allocation based on updated individual transport scores for the re-assigned transport requests; and (vi) allocate the transport requests according to the updated allocation and output a command signal to said article transport units to transport the articles in accordance with said updated allocation in the event that a difference between the updated total transport score and the initial total transport score satisfies a threshold criterion, and wherein, in the event that the difference between the updated total transport score and the initial total transport score does not satisfy the threshold criterion, repeat steps (vi) to (viii).

In an aspect, there is provided a computer program product comprising program instructions configured to program a processor to perform any method disclosed herein.

### Figures

Some embodiments will now be described, by way of example only, with reference to the figures, in which:
Fig. 1 is a schematic diagram of an example area in which a plurality of article transport units are provided for transporting items from first locations to second locations.
Fig. 2 shows an example network arrangement for implementing aspects of the present disclosure.
Fig. 3 shows a flow chart for an example method of allocating transport requests to article transport units.
Fig. 4 shows the area of Fig. 1 with the area illustrated as being divided up into a plurality of different sub-areas.
Fig. 5 shows a flow chart for an example method of determining and outputting an allocation of transport requests to article transport units.

In the drawings like reference numerals are used to indicate like elements.

### Specific Description

The present disclosure provides systems and methods for providing improved allocation of transport requests to article transport units in an area. For a given area, a plurality of transport requests are obtained which include location data relating to first and second locations (e.g. requests for transporting an article from the first location to the second location). Location data is also obtained from each of the article transport units (e.g. location data as to where the article transport unit is and/or where it is going to). Each transport request is initially assigned to an article transport unit responsible for carrying out the article transport. Using the location data, a computer may determine a transport score for a given allocation of transport requests to article transport units. The allocation may then be modified and its transport score re-calculated. Transport scores may be calculated for a number of different allocations, and based on the calculated transport scores, a preferred allocation may be identified. Transport of articles by the article transport units may then occur in accordance with this preferred allocation.

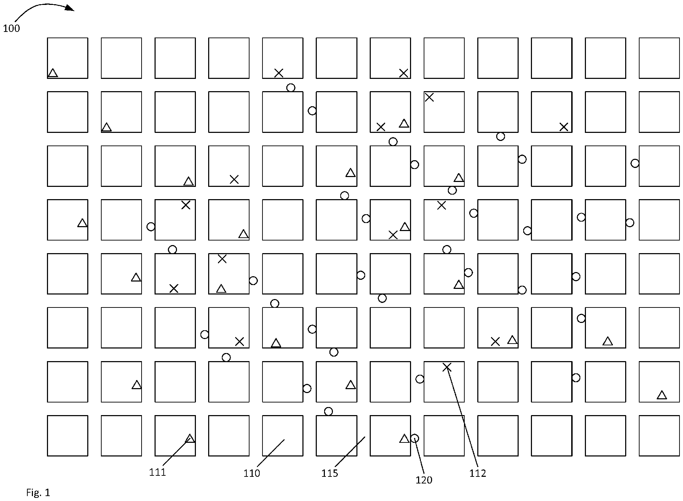

Fig. 1 shows a schematic illustration of an example area 100. The area 100 shown could be a transport network for an urban area, which is made up of a series of buildings 110 and roads 115. However, it is to be appreciated that this should not be considered limiting, and instead the layout could also apply to a layout of a storage facility (e.g. a warehouse) in which articles are stored, and which need to be moved to different locations (e.g. stored/retrieved). A plurality of article transport units 120 are shown, which are illustrated as circles at different locations on the roads 115 of the area 100. A plurality of first locations 111 are shown, which are illustrated as triangles, and a plurality of second locations 112 are shown, which are illustrated as crosses. For each article to be transported there will be an associated first location 111 where the article is to be collected, and an associated second location 112 where the article is to be delivered. Of course, there may be multiple transport requests associated with the same first and/or second location.

Each article transport unit 120 includes a device capable of providing geographical data for that device. In this context geographical data represents data which provides an indication of the current location of the article transport unit 120, and it may also provide an indication of where that article transport unit 120 is going. Geographical data is also provided for each first and second location 112. It is to be appreciated that this need not require a device to be present at each said location to provide that data. Rather, a user may input details for a first and/or second location 112 (e.g. an address to which the article is to be transported). Data indicative of geographical locations for the first and/or second locations 112 may be transmitted to a computer from any suitable user equipment.

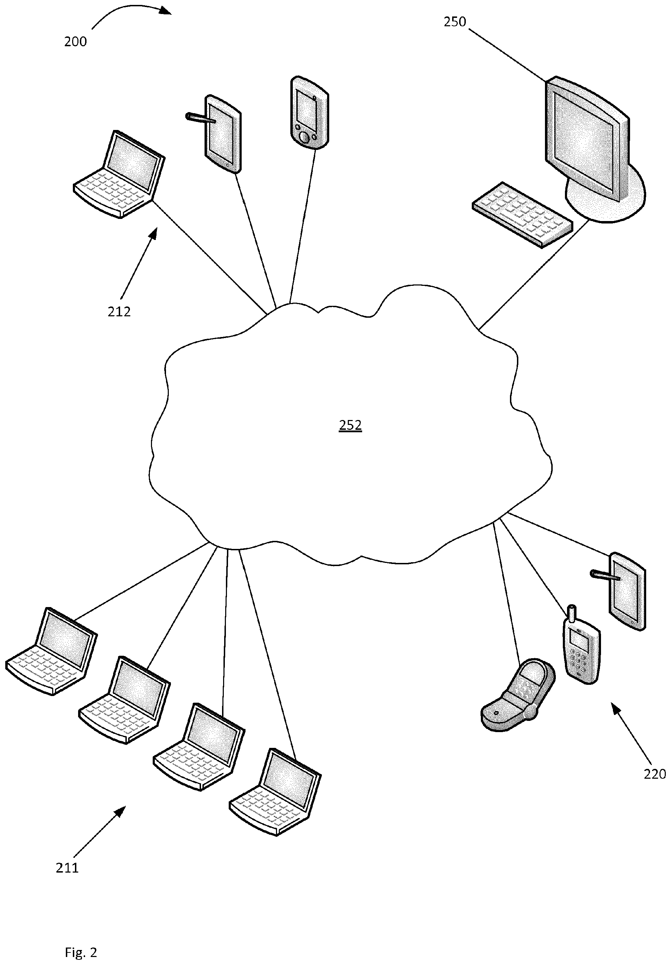

Fig. 2 shows a schematic illustration a network system 200 for implementing methods of the present disclosure in an area 100 of the type illustrated in Fig. 1.

The network system 200 includes a computer 250 which is connected to a network 252. A plurality of different devices may communicate with the computer 250 using the network 252. As shown, there are a plurality of first location devices 211 which may each be associated with a respective first location 111. There are a plurality of second location devices 212 which may each be associated with a respective second location 112. There are a plurality of article transport unit devices 220, each of which may be associated with a respective article transport unit 120. Although these have been illustrated as certain types of devices in Fig. 2, this is not to be considered limiting; any suitable item of user equipment operable to perform the necessary functions may be used. Each of the devices shown may communicate with the computer 250 by sending and receiving network messages over the network 252.

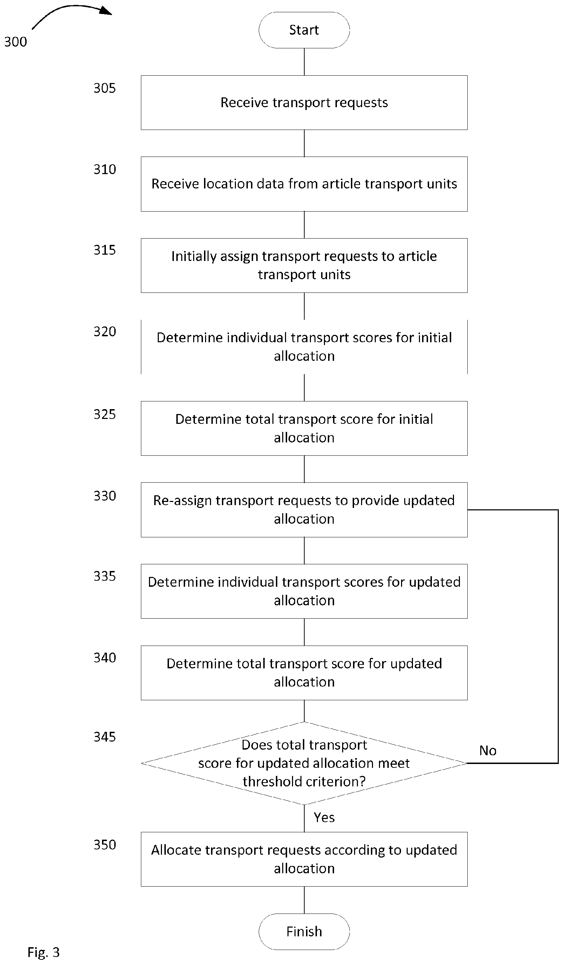

A method of operation of the devices shown in Fig. 2 in the area 100 shown in Fig. 1 will now be described with reference to the flowchart shown in Fig. 3.

At step 305, a plurality of transport requests are received at the computer 250. Each transport request may comprise an indication of a first location 111 and a second location 112. The transport request relates to an article which is to be transported to the second location 112. The transport request may be in the form of a network message sent to the computer 250 from a device 212 associated with the second location 112, such as user equipment belonging to a user currently residing at the second location 112 or the user using the device 212 to specify the second location 112, without the user necessarily being at said second location 112. The request sent by the user equipment may or may not comprise an indication of the first location 111. The computer 250 may determine a first location 111 based on data included in the network message, such as the second location 112. For example, the user may order food from a restaurant chain, and the computer 250 may determine which restaurant from the restaurant chain to use, which in turn will involve selecting the first location 111. Thus, this may not actually require a first location 111 to be specified in the message received from the user equipment.

A network message sent from the user equipment may also include additional data such as that required to select the article to be transported. A user equipment may therefore send a message to the computer 250 which comprises an indication of an article to be transported, and a destination for the article to be transported to. In some examples, the message may also include an indication of the location (e.g. the first location 111) from which the article is to be transported to the second location 112. It is to be appreciated that the message sent from the user equipment to the computer 250 may be in any suitable form from which the computer 250 may extract a transport request comprising an indication of a second location 112. Optionally, the computer 250 may then determine/obtain an indication of at least one of: the article to be transported, and the first location 111 from which said article is to be transported to the second location 112.

This may occur for a plurality of different network messages received from different users such that the computer 250 has a plurality of transport requests for articles to be transported from a plurality of first locations 111 to a plurality of respective second locations 112.

At step 310, the computer 250 receives location data from a plurality of article transport units 120. Each article transport unit 120 may transmit its location to the computer 250 in a network message. Network messages may be sent periodically, or in response to a request signal output from the computer 250, so that when determining transport scores associated with an article transport unit 120, relatively recent location data may be used, e.g. so that the location of the article transport unit 120 is accurate. The computer 250 may receive data from each article transport unit 120 providing an indication of the location of that article transport unit 120. Article transport units 120 may also transmit an indication of any future destination for that article transport unit 120, such as a first and/or second location 112 to which it is travelling.

The computer 250 may therefore be able to obtain, for each of a plurality of article transport units 120, an indication of a location of that article transport unit 120, and, for each of a plurality of articles to be transported, a first location 111 and a second location 112 associated with that article to be transported. The computer 250 may also obtain an indication of the article which is to be transported. The computer 250 may also obtain any relevant information for determining transport scores, as will be apparent from the below discussion regarding computing transport scores.

At step 315, transport requests are assigned to article transport units 120. In some examples, at this step transport requests will have already been assigned to article transport units 120. In other examples, the method comprises allocating transport requests to article transport units 120. This may be performed randomly so that each relevant transport request (e.g. each request for which the article to be transported is ready to be transported) is assigned to an article transport unit 120. Additional constraints may be placed on this allocation. For example, it may be determined that certain articles to be transported require a specific type of article transport unit 120 for performing that transport. The method may comprise a step of, for each article to be transported which is being allocated to an article transport unit 120, identifying suitable article transport units 120 for transporting said article (e.g. identifying a subset of available article transport units 120 which are capable of performing said transport), and assigning the transport request to one of said suitable article transport units 120.

Constraints may be placed on which transport requests are assigned to which article transport units 120. Each transport request may be associated with a respective type of transport request (e.g. based on size of the article), and there may be associated article transport units 120 for transporting said articles. In some examples, article transport units 120 which have specific transport capabilities may be less frequently assigned transport requests so as to retain their availability in case a more specific transport request is obtained for which that type of article transport unit 120 is required.

Transport requests are then assigned to article transport units 120. This provides an initial allocation wherein the available transport requests are each assigned to an article transport unit 120. It is to be appreciated that in some examples there may be an insufficient number of article transport units 120 available, and so either some transport requests may not be assigned to article transport units 120, or some article transport units 120 may be assigned multiple transport requests. The computer 250 may store a mapping of the transport requests to their associated assigned article transport units 120.

At step 320, an individual transport score is calculated for each assigned request in the initial allocation. The computer 250 is configured to calculate an initial transport score for each transport request based on the first and second location 112 and location data for the article transport unit 120. For a given transport request and an assigned article transport unit 120, the associated transport score may provide an indication of a degree of efficiency associated with the article transport unit 120 performing the transport of that article from the first location 111 to the second location 112. That is, the transport score may provide a cost associated with the technical process of transporting the article from the first location 111 to the second location 112 using the article transport unit 120. This cost may be a time cost; it may be a cost in terms of environmental impact.

Each individual transport score may be determined in a number of ways. For a given transport request, its transport score may be determined based on a plurality of different metrics. The computer 250 may apply a weighting to each of the different plurality of metrics so that different metrics may provide a greater contribution to the

A first metric for an article to be transported may provide an indication of a distance to be travelled by the article transport unit 120. The computer 250 may determine the first metric. The first metric is determined based on the location data for the article transport unit 120, the first location 111 and the second location 112. The first metric may provide an indication of at least one of: a distance for the article transport unit 120 to travel to arrive at the first location 111, a distance for the article transport unit 120 to travel to get from the first location 111 to the second location 112, and a total distance to be travelled by the article transport unit 120.

In determining the first metric, the computer 250 may also obtain further data. The computer 250 may obtain data relating to currently assigned articles to be transported by that article transport unit 120. For example, the article transport unit 120 may already be performing a transport of a preceding article. The second location 112 associated with that preceding transport request may therefore be obtained by the computer 250. The distance to be travelled by that article transport unit 120 may then be calculated based on the different locations to which they are required to go to before they are able to transport the article associated with this first metric. The computer 250 may obtain data relating to all articles assigned to that article transport unit 120, as there may be more than one preceding article to be transported by that article transport unit 120 before the article associated with the first metric is transported.

The indication of the distance to be travelled by the article transport unit 120 may be determined using routing software. For example, such software may identify an optimal route between the different relevant locations. An optimal route may be selected based on at least one of: minimising distance, time or environmental impact associated with the journey. Based on the optimal route(s), the relevant distance for the first metric may be determined.

A second metric for an article to be transported may provide an indication of a start time for the article transport unit 120 for performing transport of the article associated with that second metric. The start time may be defined as the time at which the article transport unit 120 starts travelling towards the first location 111 associated with the article to be transported (e.g. travelling from a second location 112 associated with a preceding transport request). However, it is to be appreciated that this is not important and that other definitions for the start time could be used, such as a time at which the article transport unit 120 accepts a transport request.

In determining the second metric, the computer 250 may also obtain further data. The computer 250 may obtain data regarding any preceding pending transport requests associated the article transport unit 120 associated with the second metric. As will be explained in more detail below, the second metric for a given transport request may be based on a third and/or fourth metric for the preceding transport request. In any case, the second metric may provide an indication of an estimated time by which the article transport unit 120 will complete its transport of the preceding article (e.g. immediately prior to said article transport unit 120 performing the relevant transport for the transport request associated with the second metric).

The computer 250 may determine the second transport request based on an indication of distance to be travelled by the article transport unit 120 before it can start the transport request. For example, this may be a distance to be travelled by the article transport unit 120 until it reaches the second location 112 of the preceding transport request. This may correspond to a first metric associated with the preceding transport request. Other factors than distance alone may be taken into account by the computer 250. The computer 250 may obtain an indication of traffic levels, including an indication of likely traffic to be experienced by the article transport unit 120 along its journey. The computer 250 may determine a route for the article transport unit 120, and based on this route, data regarding speed limits or average speeds associated with that route may be obtained to provide an indication for an estimated journey time. In determining an estimated journey time, the computer 250 may also obtain data regarding the type of article transport unit 120 to be used. This data may also be used when determining routing, as different article transport units 120 may have different routing options, such as cyclists being able to use cycle lanes, which cars cannot.

The computer 250 may also obtain article transport data which is specific to transporting articles in an area 100. The article transport data may include data indicative of how long it takes for an article to be collected at a first location 111, and/or how long it takes for an article to be deposited at the second location 112. In some examples, the article may be a perishable good (such as a takeaway meal) and the first location 111 is a facility responsible for preparing the article. A preparation time for the article may be obtained from the facility by the computer 250. This may provide an indication of a time at which the article will be ready for collection from the first location 111.

In the event that the computer 250 receives a transport request relating to a particular facility (e.g. associated with a first location 111), the computer 250 may forward the request to that facility. In response, the facility may send a response message indicating whether or not they accept the request, and optionally, in the event that they accept the request, an indication of an estimated time by which the article will be ready for collection. The second metric for an transport request may be determined based on whether or not a such response message has been received by the computer 250. In the event that a response message has been received by the computer 250, and the response message comprises an indication of a time at which the article will be ready for collection from the first location 111, the computer 250 may determine the second metric based on this time. The computer 250 may, for a selected period of time, send and receive messages to/from the facility so that the time by which the article will be ready for collection is updated. The facility may send a message to the computer 250 in response to a change in the status of the article to be collected.

On the basis of this data, the second metric may be determined so that it provides an estimate for the total amount of time remaining for the article transport unit 120 to transport each article it is planned to transport before it can start transporting the current article. This estimate may be based on total time expected both for the article transport unit 120 in transit and in collecting/depositing any articles. This may provide an estimate for the time at which the article transport unit 120 can begin the relevant transit for transporting the article in question from its first location 111 to second location 112.

It is to be appreciated that the above calculations may provide an estimate for the time when the article transport unit 120 may be ready to commence relevant transport for fulfilling the transport request. However, this estimate is not 100% accurate. Instead, there may be a degree of uncertainty included. The computer 250 may determine a range of estimated times at which the article transport unit 120 may be likely to finish its transport of the preceding article. For example, this may include an earliest expected time and a latest expected time. These may be based on a probability distribution (e.g. so that a threshold percentage of total outcomes occur after this time - such as 95% of all deliveries would be expected to have occurred before the latest expected time or 5% of deliveries would be expected to not have been delivered before the earliest expected time). This may provide an indication of the variance associated with the article transport unit 120 performing transport of the article. The variance may be taken into account by the computer 250 when determining the second metric.

A third metric for an article to be transported may provide an indication of estimated arrival times for the article transport unit 120 at at least one of: (i) the first location 111 and (ii) the second location 112 associated with that transport request. The time of arrival for the article transport unit 120 at either the first or second location 112 may be determined in a similar manner as for determining the time at which an article transport unit 120 will complete a transport request, as described above for the second metric. That is, for example, it may be determined based on at least one of: (i) distance to travel (e.g. first metrics), (ii) traffic, map or speed limit data, (iii) type of article transport unit 120 involved, (iv) a number of articles assigned to an article transport unit 120, (v) location data for articles assigned to the article transport unit 120, (vi) facility data for a facility data associated with the first location 111 (e.g. time article will be ready/whether or not response message has been received at computer 250), (vii) a variance of time/distance estimates, and (viii) an expected time at which the article transport unit 120 will finish transporting the preceding article (e.g. second metrics).

In view of the above, the computer 250 may be able to determine, for each transport request assigned to an article transport unit 120, an estimated time of arrival, at the second location 112, of the article to be transported, after having been transported by said article transport unit 120. In managing a fleet of article transport units 120, one object may be to provide delivery of each article as early as possible. This may be measured in terms of reducing the average time between a user submitted a request for an article and the time at which the article is delivered to the second location 112. It may be measured based on minimising the number of instances in which the time between a user submitting a request for an article and the time at which the article is delivered to the second is greater than a threshold value. The size of this time difference may be more important for some articles to be transported than others. For example, some articles, such as perishable goods, may have shorter lifetimes and so their transport to the user may be prioritised to avoid delivery of an article after it has reached an expiry date (or is close to, e.g. within a threshold amount of, so doing).

The computer 250 may obtain, for each transport request, a target time of arrival at the second location 112. The target time may be determined by the computer 250 based on historical transport data. The user may obtain it from a message in which it was specified/agreed by a user responsible for making the transport request and/or it may be specified the facility associated with the first location 111 for the transport request. As a result, for each transport request, there may be an associated target time for arrival of the article at the second location 112, and an associated estimated time for arrival of the article at the second location 112.

A fourth metric for a transport request for an article to be transported may be determined by the computer 250 based on the associated target time for arrival of the article at the second location 112 and the associated estimated time for arrival of the article at the second location 112. In some examples, the fourth metric may alternatively, and/or additionally, be based on an associated target time for arrival of the article at the first location 111 and an associated estimated time for arrival of the article at the first location 111. The fourth metric may be based on a differential of the estimated time for arrival and the target time for arrival. In the event that the target time of arrival is for the first location 111, the target time may be based on (e.g. it may be at, or any time after) the time by which the article will be ready for collection at the first location 111. The fourth metric may therefore provide an indication of the estimated arrival time in comparison to the target arrival time.

For each transport request which has been assigned to an article transport unit 120 in the initial allocation, the computer 250 is configured to determine, using these four metrics, or at least some of them (such as the third and/or the fourth), an initial transport score for that transport request. The computer 250 may apply a weighting to control the relative contribution of each metric used, and/or each item of data used for determining a value for each metric. Weightings used may be refined over time using e.g. machine learning algorithms for providing improved results based on experimental data. Thus, using the data obtained by the computer 250, a score may be calculated based on which an improved allocation of transport requests to article transport units 120 may be identified.

At step 325, a total transport score for the initial allocation is determined. The total transport score is determined based on each of the individual transport scores. The total may represent a sum of the individual transport scores. The total may represent a weighted sum of the individual transport scores, so that the impact of individual scores which indicate a particularly unfavourable assignment of a transport request to an article transport unit 120 is greater. This may enable the total score to more sensitive to bad scores, e.g. so that the system may reduce the number of instances of an allocation in which at least one delivery of an article is below a threshold level of quality.

At step 330, some of the transport requests which had been assigned to selected article transport units 120 in the initial allocation are reassigned to different article transport units 120. All transport requests may be reassigned, or only a subset may be reassigned. The reassigned transport requests form an updated allocation. The computer 250 may be configured to determine which subset to reassign based on their individual transport scores. A value for the individual transport score may indicate efficiency associated with the article transport unit 120 performing that article transport. Therefore, based on the value for the individual transport scores, the computer 250 may determine which transport requests have been assigned to suitable article transport units 120. Reassigning may comprise assigning transport requests to article transport units 120 so that the allocation of transport requests is different from the initial allocation of those same transport requests. As steps 330 to 345 are iterative, step 330 may comprise reassigning all transport requests some times, and only assigning a subset of the transport requests another time. The computer 250 may determine how large the subset should be based on the results of the analysis in step 345 (e.g. if the transport score is close to the threshold criterion then only a few shall be reassigned and if it is far away then more shall be reassigned). This may help reduce processing overhead in cases where the computer 250 has nearly identified a suitable allocation.

At step 335, individual transport scores are determined for the updated allocation. Individual transport scores may be determined in the same manner as described above in relation to step 320. The computer 250 may be configured to duplicate transport scores which were the same as those calculated in an earlier step (e.g. because the transport request is assigned to the same article transport unit 120), which may reduce processing overhead associated with determining transport scores. However, in some examples, the individual transport score for a transport request may also be dependent on other transport requests (e.g. because they are being transported by the same article transport unit 120), and so transport scores may need to be determined for transport requests which are assigned to the same article transport unit 120 as they previously were.

At step 340, the updated individual transport scores (e.g. the newly-determined scores for the updated allocation) are combined to provide a total transport score. This may be performed in a manner analogous to that in step 325. As in step 335, processing overhead may be reduced by only updating based on the individual transport scores which have been changed in step 335.

At step 345, the total transport score for the updated allocation is compared to a threshold criterion. The threshold criterion may be a relative measure which monitors a relative change in transport scores, e.g. it compares a currently-calculated total transport score for the updated allocation to a previously-calculated total transport score for at least one preceding allocation. This may involve use of a convergence criterion based on a number of iterations of calculating total transport scores. This may enable identification of a time by which performing further iterations (e.g. calculating further transport scores) is unlikely to yield any tangible improvement in allocation. This may help reduce processing overhead associated with assigning transport requests to article transport units 120.

For example, the threshold criterion may not be a binary assessment based on one absolute value of the total transport score. Meeting the threshold criterion may occur in the event that a number of iterations have occurred for updating the allocation and determining a total transport score for each updated allocation. For example, if a first updated allocation yields a first total transport score and none of a selected number of updated allocations yield a total transport score as high as the first total transport score, then the first updated allocation will be determined to satisfy the threshold criterion.

That is, a baseline total transport score may be defined which represents the current best allocation (e.g. the updated allocation with the highest total transport score). Each time re-assignment occurs and an updated total transport score is determined for that re-assignment that updated total transport score is compared to the baseline total transport score. If the baseline total transport score is greater, then it will remain as the baseline total transport score, with the current best allocation remaining as a baseline allocation. If this process is repeated and there is no change in the baseline allocation, then the baseline allocation will be used to allocate transport requests. A time limit may be defined so that, once that time limit is reached, the baseline allocation at the time limit is taken as to allocation for allocating transport requests. The threshold criterion may be an assessment based on the baseline allocation and the baseline total transport score.

In step 345, the newly-calculated total transport score for the updated allocation may be compared to a previous total transport score. If the newly-calculated transport score does not provide a better allocation than the previous total transport score then the previous allocation associated with the previous total transport score is retained as a selected allocation. If the newly-calculated transport score does provide a better allocation than the previous total transport score then the updated allocation associated with the newly-calculated transport score is selected and it replaces the previous allocation as a selected allocation. At step 345, this process may be repeated each time, and an allocation may be determined to satisfy the threshold criterion in the event that an allocation has remained the selected allocation for a threshold number of iterations. Once the threshold number of iterations is reached, it may be determined that the likelihood of identifying an allocation with a better score is beneath a threshold level.

In assessing whether or not the threshold criterion is satisfied, the computer 250 may calculate a rate of change of total transport scores for subsequent allocations (e.g. a change as observed over a number of preceding allocations). For example, if there are large changes in total transport score for allocations (for preceding and/or current allocations) then this may indicate that there is still potential to identify improved allocations. Likewise, if the change is small, even though there may be a marginal improvement between subsequent allocations (e.g. where the difference in subsequent transport scores is below a threshold value), the computer 250 may determine that a current selected allocation is suitable, as its total score may only improve marginally in subsequent iterations. This may reduce processing overhead associated with repeated calculations. The computer 250 may implement machine learning software to update and identify values for weightings used during the method, e.g. weightings used in calculating transport scores and/or when reassigning transport requests. Values for these weightings may be trained based on encouraging the method to reach a stable and final allocation within a threshold number of iterations. For example, there may be a trade-off between explorative and exploitative behaviour, and suitable bandit-type algorithms may be utilised to enable a suitably rapid convergence on a selected allocation.

The outcome of step 345 is to determine whether or not the updated allocation meets the threshold criterion. In the event that it does, the method proceeds to step 350, and in the event that it does not, the method returns to step 330. In returning to step 330, steps 330, 335, 340 and 345 are repeated (with some transport requests being assigned to different article transport units 120). This process is repeated (e.g. iterated) until an updated allocation satisfies the threshold criterion in step 345. In which case, the method proceeds to step 350.

At step 350, the transport requests are allocated to their respective assigned article transport units 120. The computer 250 may output an indication of this allocation so that each article transport unit 120 is made aware of any transport requests it has been assigned. For example, the computer 250 may send, to each article transport unit 120, a network message comprising an indication of a first location 111 the article transport unit 120 needs to go to and a time by which it needs to be there. The network message may comprise an indication of a second location 112 the article transport needs to go to after travelling to the first location 111. The network message may comprise an indication of the article to be collected at the first location 111 and/or details associated with the user at the second location 112.

Step 350 may comprise outputting a command signal indicating the allocation of transport requests to article transport units 120. This may comprise providing instructions and/or data which is executable by a processor at an article transport unit 120 to provide navigation of the article transport unit 120 to the required locations as per the selected allocation. At the article transport unit 120, this data may be executed by e.g. a device with satellite navigation capabilities, which provides instructions on a head up display for the navigation of the article transport device to the required locations e.g. the first location 111 then the second location 112. The data sent to the article transport units 120 may also provide an indication on the heads up display of the article to be collected at the first location 111. It may also comprise means for establishing a communication link between the article transport unit 120 and a user associated with the second location 112.

The method may be performed by the computer 250 before any transport request is assigned to an article transport unit 120. This may reduce any potential confusion and enable a seamless interface between the article transport unit 120 and the transport requests. This may reduce any network overload associated with sending and receiving multiple messages between the computer 250 and the article transport units 120. Instead, the computer 250 may be configured to indicate to the article transport unit 120, in a single message, the necessary locations to which it needs to travel, and what it is to do there. Such messages may be formatted for execution at the article transport unit 120 by software for providing navigation assistance. The article transport units 120 may have autonomous driving capabilities and providing such data comprises indicating to the article transport units 120 to perform transport according to their assigned request. The data may be sent in a format so that software of the autonomous vehicle may execute this data and then perform the required journey.

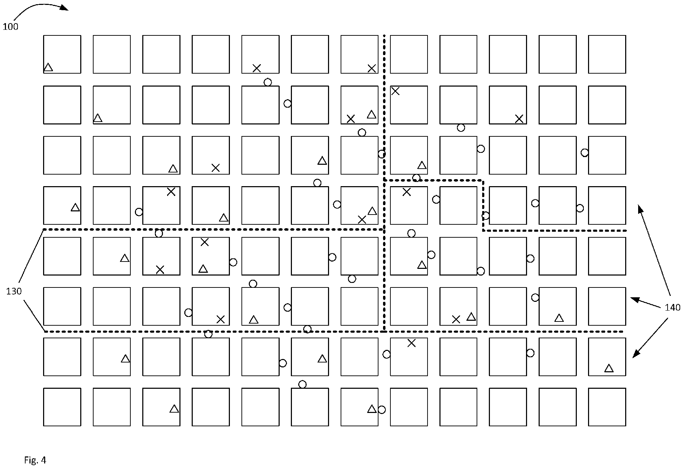

Additional features of the method of Fig. 3 will now be described with reference to Fig. 4.

Fig. 4 shows the area 100 of Fig. 1. In addition, a plurality of dividing lines 130 are indicated as dashed lines. The dividing lines 130 divide the area 100 into a plurality of different zones 140 (e.g. different sub-areas of the area 100). Although the lines 130 are show as running down roads 115, this is not to be considered limiting, their purpose is to divide the region into sub-regions, the exact division is not crucial.

The division of the area 100 into sub-areas may be implemented into the method of Fig.3. For example, this may form a step between steps 325 and 330. At this stage, the computer 250 may have received an indication of a first location 111, a second location 112 and location data associated with the article transport unit 120. The method may then comprise determining how to divide the region into zones 140 (e.g. determining where the zones 140 should cover). The method may then comprise, for each zone 140, performing the remaining steps of the method based on that zone 140 alone, e.g. not including requests associated with other zones 140 when assigning/reassigning requests. This may then provide an allocation for one zone 140. The method is then repeated for the remaining zones 140 until all of the transport requests have been allocated to article transport units 120. Thus an overall allocation may be defined which corresponds to a combination of each of the allocations for zones 140.

The computer 250 may be configured to determine the division of the area 100 based on at least one of the first location 111, the second location 112 and geographical data for the article transport units 120. The different zones 140 for the area 100 may be updated in a dynamic fashion according to the distribution of locations and location data, e.g. they may be continuously being updated and changed. The computer 250 may also determine the number of zones 140 into which the area 100 is to be divided. This number may be determined based on a number of available article transport units 120 and/or a number of pending transport requests. For example, the number of divisions may increase with the number of available article transport units 120/transport requests, e.g. there may be a series of threshold numbers of units 120/requests, above which an additional zone 140 may be included. The computer 250 may determine, based on the number of pending transport requests and/or the number of available transport requests, a number of divisions for the area 100. This may be determined based also on geographic factors, such as city limits and/or data concerning distances an article transport unit 120 may be expected to travel.

The boundaries of each zone 140 may be determined based on the contents within that zone 140. For example, the zones 140 may be defined so that each zone 140 contains at least a threshold number of article transport units 120. For article transport units 120 within an area 100, a zone 140 may be defined to extend to include a sufficient number of first/second locations 112 within the proximal area, e.g. so that article transport units 120 associated with that zone 140 will be transporting articles within that zone 140 (e.g. they won't be crossing over into other zones 140). The zones 140 may be split up to take into account clusters of first and/or second locations 112. The zones 140 may be determined based on an indication of where article transport units 120 will be in a certain time period, e.g. upon finishing a delivery.

The computer 250 is configured to dynamically determine the zones 140. This may be initiated periodically at routine time intervals, e.g. every 15 mins. It may be initiated in response to a change associated with available transport units 120 and/or pending transport requests. For example, each time a new request is received or a threshold number of new requests are received, the computer 250 may determine whether or not to split the area 100 into zones 140, and if so, how many zones 140 into which they need to split the area 100. In the event that a request needs to be reassigned to a different article transport unit 120, the determination may also be performed. It is to be appreciated that similar concerns may also trigger a repeating of the method 300, e.g. it is repeated starting from the start (not step 330) in response to any and/or all of the above described conditions. The process may therefore be a dynamic one which continually provides up to date allocations which are indicative of, and based on, current conditions in the area 100.

Providing zones 140, and calculating total transport scores/determining allocations using them, may increase total calculation speeds. For example, when re-calculating scores/assigning transport requests, the computer 250 may only need to perform such calculations for the relevant zone 140. Therefore, in the event that new requests only relate to a select portion of the area 100, the computer 250 may be configured to divide the area 100 into zones 140, and so there will be fewer article transport units 120 to consider when performing said calculations. In turn there may therefore be fewer iterations of swapping requests and article transport units 120 needed until a preferred allocation can be identified and selected. In general, when performing the calculation from a subset of the total number of article transport units 120 available, the number of permutations which could be run when reassigning is reduced, and as this number would scale exponentially, the total number is reduced for the entire area 100. In turn this reduces processing overheads and renders the method more scalable for larger quantities/numbers of transport requests. Additionally, as the scores may be indicative of transport time and environmental impact, it can be assumed that by focussing in on smaller subsets of the area 100 (zones 140), and calculating total transport scores for each zone 140, the total transport for the area 100 as a whole will not be compromised.

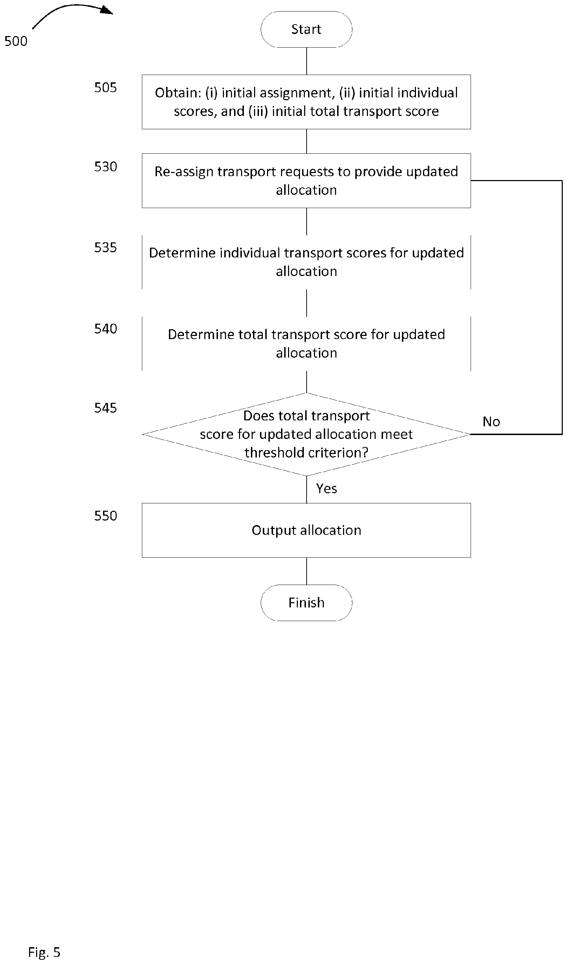

Fig. 5 shows a flowchart 500 for a method of determining and outputting an allocation of transport requests. The method of Fig. 5 may be implemented by a computer/server (e.g. in cloud software). This may enable third parties to send data to the computer 250 and in return receive a suitable allocation. The method may be initiated in response to receiving data at the computer 250 in step 505.

At step 505, the computer 250 obtains data pertaining to the transport of articles in the area 100. For example, this may be in the form of an initial assignment (and thus location data for the article transport units 120 in addition to first and second location 112 data for transport requests). In some examples, the method of performing an allocation may occur on a rolling basis so that at any point in time there is an allocation present, but that it may need updating. Previously assigned transport requests may not yet have been sent to their assigned article transport unit 120 because e.g. the article for collection was not yet near ready. Thus, these transport requests may be reassigned to different article transport units 120. The method may restart in response to a threshold number of new transport requests being received. Thus, the method of Fig. 5 may be considered to correspond to the method of Fig. 3 except that it does not require an initial allocation of transport requests and determination of their initial transport scores. Instead, the computer 250 may obtain this data as it has previously been calculated by the computer 250.

For example, whenever a transport score is calculated, it may be stored by the computer. In some examples, at the time of assignment of transport requests to article transport units, the relevant individual transport scores are determined. This may comprise retrieving stored data for requests and scores which have already been determined. It may comprise determining scores for requests which have not yet been determined. Each time a new score is determined, it may be saved by the computer for later access.

As set out above with reference to Fig. 3, network messages may be sent from article transport units 120 to the computer 250. Some received locations and/or travel routes may be cached e.g. in a data store of the computer 250. These may then be directly retrieved when necessary and may avoid receiving messages/calculating transit properties for an article transit unit 120 (e.g. when the relevant article transit unit 120 is engaged, such as being offline or in the middle of a transit). Direct retrieval of cached data from memory may improve speeds. For example, caching some article transport unit data may enable the computer to operate without needing knowledge of where an article transport unit 120 currently is, as stored data will indicate e.g. where it is going, what route it is taking and/or an expected time of arrival. The computer may cache relevant data for article transport units 120 which may still be applicable next time an assignment needs to be updated and total transport score calculated (e.g. to account for new articles to be transported).

Steps 530 to 545 may then correspond exactly to steps 330 to 345 respectively, as discussed above in relation to Fig. 3.

At step 550, the updated allocation may be output. In this regard, this may differ from the method of Fig.3 in the event that the method relates to a computer 250 performing the operations e.g. prior to sending to a third party. As such, providing an output in step 550 may comprise providing details for the output which may then be used by the third party to instruct the article transport units 120 as to their journeys.

It is to be appreciated that whilst the above determinations have been made with regard to certain metrics. However, the specifics of these metrics need not be considered limiting. Instead, they represent an example of determining transport scores and allocations. It will be appreciated that use of all of the metrics described is also not essential. For example, an indication of the distance to be travelled (first metric) and/or a time of completion of the preceding job (second metric) are not essential for using an estimated time of arrival at the second location 112 (third metric). The transport score may instead be determined based solely on the time of arrival of the article transport unit 120 at the second location 112. In some examples, transport scores may just be determined based on a comparison of the estimated time of arrival of the article transport unit 120 at the second location 112 and the target time of arrival for that article transport unit 120 to arrive at the second location 112.

It is to be appreciated that transport scores are calculated based on data used so that they provide an indication of information which reflects properties of the technical system of the article transport units 120 in the area 100. These may provide an indication of likely travel times associated with each assigned article transport unit 120 performing said transport of an article. However, it is to be appreciated that the transport score may provide an indication of an environmental impact of a required journey for an article transport unit 120 to travel from its current location to the first location 111 and on to the second location 112. For example, this environmental impact may be indicative of not only the environmental impact of that journey in isolation, but also the environmental impact of that journey at the time at which the article transport unit 120 is likely to perform that journey (e.g. taking into account predicted traffic levels for the time at which the article transport unit 120 is performing that journey). This may of course be influenced based on total journey time and/or distance, but also other factors such as type of article transport unit 120, traffic conditions, estimated speeds along the route may also influence the environmental impact of the journey. The computer 250 may therefore use this may enable the identification of journeys with high or low environmental impact, in particular journeys for which the journey from the current location of an article transport unit 120 to the first location 111 is particularly good or bad for the environment.

In some examples, the third metric may additionally and or instead be used to provide an indication of an environmental impact associated with transport of an article. For example, the score may represent the scale of a negative impact of that delivery on the environment. By identifying improved allocations of transport requests to article transport units 120, systems and methods of the present disclosure may be able to identify allocations which provide for a reduction in the overall environmental impact of utilising a delivery network in an area 100.

It is to be appreciated that article transport units 120 may be any suitable means for performing transport of an article. For example, they may comprise cars, bicycles, motorbikes, lorries, vans, or any other suitable delivery means. In some examples, the article transport units 120 may be provided (at least partially) with autonomous driving functionality. Systems and methods of the present disclosure may enable control of such autonomous article transport units 120, e.g. to control a fleet of such vehicles to transport articles in accordance with the selected allocation. Article transport units 120 may also comprise robots, such as those for delivery of articles in residential and/or urban areas. It is also to be appreciated that articles may comprise any suitable article to be delivered from a first location 111 to a second location 112. The methods and systems of the present disclosure may relate specifically to one context of article, or they may relate to methods and systems for delivering different sorts of articles. Examples of suitable articles may comprise perishable goods such as food, e.g. from takeaway restaurants, shopping objects, people, equipment or supplies for industry and/or other activities.

It will be appreciated from the discussion above that the embodiments shown in the figures are merely exemplary, and include features which may be generalised, removed or replaced as described herein and as set out in the claims. With reference to the drawings in general, it will be appreciated that schematic functional block diagrams are used to indicate functionality of systems and apparatus described herein. In addition the processing functionality may also be provided by devices which are supported by an electronic device. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

As will be appreciated by the skilled reader in the context of the present disclosure, each of the examples described herein may be implemented in a variety of different ways. Any feature of any aspects of the disclosure may be combined with any of the other aspects of the disclosure. For example method aspects may be combined with apparatus aspects, and features described with reference to the operation of particular elements of apparatus may be provided in methods which do not use those particular types of apparatus. In addition, each of the features of each of the embodiments is intended to be separable from the features which it is described in combination with, unless it is expressly stated that some other feature is essential to its operation. Each of these separable features may of course be combined with any of the other features of the embodiment in which it is described, or with any of the other features or combination of features of any of the other embodiments described herein. Furthermore, equivalents and modifications not described above may also be employed without departing from the invention.

Any processors used in the computer 250 (and any of the activities and apparatus outlined herein) may be implemented with fixed logic such as assemblies of logic gates or programmable logic such as software and/or computer program instructions executed by a processor. The computer 250 may comprise a central processing unit (CPU) and associated memory, connected to a graphics processing unit (GPU) and its associated memory. Other kinds of programmable logic include programmable processors, programmable digital logic (e.g., a field programmable gate array (FPGA), a tensor processing unit (TPU), an erasable programmable read only memory (EPROM), an electrically erasable programmable read only memory (EEPROM), an application specific integrated circuit (ASIC), or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof. Such data storage media may also provide the data store of the computer system (and any of the apparatus outlined herein).

In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein. In examples, navigation equipment has been described for routing article transport units 120 between different destinations. It is to be appreciated that such functionality may be provided by specially-designed APIs for satellite navigation, such as those provided by e.g. Google.

It is to be appreciated that, in the context of the present disclosure, the user equipment illustrated in the Figs encompasses any user equipment (UE) for communicating over a wide area network and having the necessary data processing capability. It can be a hand-held telephone, a laptop computer equipped with a mobile broadband adapter, a tablet computer, a Bluetooth gateway, a specifically designed electronic communications apparatus, or any other device. It will be appreciated that such devices may be configured to determine their own location, for example using global positioning systems GPS devices and/or based on other methods such as using information from WLAN signals and telecommunications signals. The user device may comprise a computing device, such as a personal computer, or a handheld device such as a mobile (cellular) telephone or tablet. Wearable technology devices may also be used. Accordingly, the communication interface of the devices described herein may comprise any wired or wireless communication interface such as WI-FI (RTM), Ethernet, or direct broadband internet connection, and/or a GSM, HSDPA, 3GPP, 4G or EDGE communication interface.

Messages described herein may comprise a data payload and an identifier (such as a uniform resource indicator, URI) that identifies the resource upon which to apply the request. This may enable the message to be forwarded across the network to the device to which it is addressed. Some messages include a method token which indicates a method to be performed on the resource identified by the request. For example these methods may include the hypertext transfer protocol, HTTP, methods "GET" or "HEAD". The requests for content may be provided in the form of hypertext transfer protocol, HTTP, requests, for example such as those specified in the Network Working Group Request for Comments: RFC 2616. As will be appreciated in the context of the present disclosure, whilst the HTTP protocol and its methods have been used to explain some features of the disclosure other internet protocols, and modifications of the standard HTTP protocol may also be used.

Other examples and variations of the disclosure will be apparent to the skilled addressee in the context of the present disclosure.

## Claims

1. A method of transporting articles within an area, the method comprising the steps of:
(i) obtaining, by a computer, a plurality of transport requests, wherein each transport request is for a respective article to be transported from a first location to a second location;
(ii) obtaining, by the computer, location data for each of a plurality of article transport units;
(iii) obtaining, by the computer, an initial allocation providing an assignment of the plurality of transport requests to a plurality of the article transport units;
(iv) obtaining, by the computer, an initial individual transport score for each of the plurality of allocated transport requests, wherein each said score for a request is determined based on location data for the article transport unit assigned that request and at least one of: (a) the first location, and (b) the second location for that request;
(v) obtaining, by the computer, an initial total transport score for the initial allocation based on the initial individual transport scores;
(vi) re-assigning, by the computer, at least a subset of the plurality of allocated transport requests to different article transport units to provide an updated allocation of transport requests which is different to the initial allocation;
(vii) determining, by the computer, an updated total transport score for the updated allocation based on updated individual transport scores for the re-assigned transport requests; and
(viii) allocating, by the computer, the transport requests according to the updated allocation and outputting a command signal to said article transport units to transport the articles in accordance with said updated allocation in the event that a difference between the updated total transport score and the initial total transport score satisfies a threshold criterion, and wherein, in the event that the difference between the updated total transport score and the initial total transport score does not satisfy the threshold criterion, repeating steps (vi) to (viii).

2. The method of claim 1, wherein the article transport units comprise autonomous and/or unmanned vehicles and/or robots.

3. The method of any preceding claim, wherein step (v) comprises dividing the area into a plurality of zones so that each zone has a respective plurality of transport requests associated with that zone.

4. The method of claim 3, wherein the method is repeated for each of the zones so that, for each zone, an updated allocation of transport requests is determined for articles and/or article transport units associated with said zone.

5. The method of any preceding claim further comprising obtaining transport network data associated with the area; and
wherein the initial individual transport scores are based also on said transport network data.

6. The method of any preceding claim, wherein step (vi) comprises selecting a subset of the plurality of allocated transport requests to be re-assigned, wherein said selection is based on the individual transport scores for each of the plurality of allocated transport requests.

7. The method of any preceding claim, wherein each individual transport score for a said article to be transported from a first location to a second location by a first article transport unit is determined based on at least one of:
(i) a first target time of arrival, wherein the first target time of arrival is for the first article transport unit at the first location;
(ii) a first estimated time of arrival, wherein the first estimated time of arrival is for the first article transport unit at the first location;
(iii) a difference between the first target time of arrival and the first estimated time of arrival;
(iv) a second target time of arrival, wherein the second target time of arrival is for the first article transport unit at the second location having travelled from the first location;
(v) a second estimated time of arrival, wherein the second estimated time of arrival is for the first article transport unit at the second location having travelled from the first location; and
(vi) a difference between the second target time of arrival and the second estimated time of arrival.

8. The method of any preceding claim, wherein the threshold criterion is based on an iteration count for the number of repetitions of steps (vi) to (viii).

9. The method of any preceding claim, wherein re-assigning of the at least a subset of the plurality of allocated transport requests is based, at least in part, on a random element.

10. The method of any preceding claim, wherein step (ii) further comprises receiving location data measured using location sensors at the article transport units.

11. The method of any preceding claim, wherein outputting a command signal to an article transport unit comprises sending an instruction message comprising data configured so that a device at said article transport unit is operable to provide navigation of said article transport unit to at least one of: (i) the first location, and (ii) the second location.

12. The method of any preceding claim, wherein step (viii) comprises operation of the article transport units to transport each respective article from a said first location to a said second location.

13. A computer-implemented method of simulating transport of articles within a area, the method comprising:
(i) obtaining a plurality of transport requests, wherein each transport request is for a respective article to be transported from a first location to a second location;
(ii) obtaining location data for each of a plurality of article transport units;
(iii) obtaining an initial allocation providing an assignment of the plurality of transport requests to a plurality of the plurality of article transport units;
(iv) simulating, based on the obtained location data for the respective article transport units the respective first and second locations, transport of each of the respective articles from their respective first location to their respective second location by their respective article transport unit according to the initial allocation;
(v) determining, based on said simulation, an initial total transport score for the initial allocation, wherein the total transport score is based on an initial individual transport score for each of the plurality of allocated transport requests;
(vi) re-assigning at least a subset of the plurality of allocated transport requests to different article transport units to provide an updated allocation of transport requests which is different to the initial allocation;
(vii) simulating, based on the obtained location data for the respective article transport units and the respective first and second locations, transport of each of the respective articles from their respective first location to their respective second location by their respective article transport unit according to the updated allocation.

14. An article transport system comprising:
a computer; and
a plurality of article transport units;
wherein the computer is configured to:
(i) obtain a plurality of transport requests, wherein each transport request is for a respective article to be transported from a first location to a second location;
(ii) obtain location data for each of a plurality of article transport units;
(iii) obtain an initial allocation providing an assignment of the plurality of the plurality of article transport units to provide an initial allocation;
(iv) obtain an initial individual transport score for each of the plurality of allocated transport requests, wherein each said score for a request is determined based on location data for the article transport unit assigned that request and at least one of: (a) the first location, and (b) the second location for that request;
(v) determine an initial total transport score for the initial allocation based on the initial individual transport scores;
(vi) re-assign at least a subset of the plurality of allocated transport requests to different article transport units to provide an updated allocation of transport requests which is different to the initial allocation;
(vii) determine an updated total transport score for the updated allocation based on updated individual transport scores for the re-assigned transport requests; and
(viii) allocate the transport requests according to the updated allocation and output a command signal to said article transport units to transport the articles in accordance with said updated allocation in the event that a difference between the updated total transport score and the initial total transport score satisfies a threshold criterion, and wherein, in the event that the difference between the updated total transport score and the initial total transport score does not satisfy the threshold criterion, repeat steps (vi) to (viii).

15. A computer program product comprising program instructions configured to program a processor to perform the method of any of claims 1 to 13.
